## Europäisches Patentamt
## European Patent Office
## Office européen des brevets

(11) Veröffentlichungsnummer: **0 129 131**
A2

(12) # EUROPÄISCHE PATENTANMELDUNG

(21) Anmeldenummer: **84106345.6**

(22) Anmeldetag: **04.06.84**

(51) Int. Cl.³: **B 65 D 77/06**
G 01 B 11/08, B 67 D 1/08

(30) Priorität: **10.06.83 CH 3203/83**

(43) Veröffentlichungstag der Anmeldung:
**27.12.84 Patentblatt 84/52**

(84) Benannte Vertragsstaaten:
**AT BE CH DE FR GB IT LI NL SE**

(71) Anmelder: **Jacobs Beverage Systems AG**
**Kollerstrasse 4**
**CH-6301 Zug(CH)**

(72) Erfinder: **Bonne, Harry**
**In der Appenhalten 26**
**CH-8706 Meilen(CH)**

(72) Erfinder: **Mägerle, Christian**
**Ilgenstrasse 4**
**CH-8032 Zürich(CH)**

(74) Vertreter: **Patentanwälte Schaad, Balass, Sandmeier,**
**Alder**
**Dufourstrasse 101 Postfach**
**CH-8034 Zürich(CH)**

(54) **Einwegverpackung für Flüssigkeiten.**

(57) Auf einen Nippel (10) in der Auslassöffnung (4) eines Flüssigkeitsbehälters (2) ist ein, in einer Entnahmeleitung (36) aus unter Betriebsbedingungen nicht dehnbarem, vorzugsweise biegeelastischem, Material, angeordnetes Kugelrückschlagventil (22) formschlüssig befestigt. Am freien Ende der Entnahmeleitung (36) ist ein Absperrorgan (44) angeordnet. Letzteres weist radial angeordnete Oeffnungen (52, 52', 52") auf, die zusammen mit einer das Absperrorgan umgebenden Manschette (54) ein Ueberdruckventil bilden. Kugelrückschlagventil (22) und Absperrorgan (44) sind mittels Hochfrequenzschweissen in der Entnahmeleitung befestigt.

Die Flüssigkeit wird durch Zusammenpressen der Entnahmeleitung (36) entnommen. Diese Einwegverpackung gestattet ein genaues, reproduzierbares Dosieren der Flüssigkeit.

./...

Croydon Printing Company Ltd

Einwegverpackung für Flüssigkeiten

Die Erfindung betrifft eine Einwegverpackung für Flüssigkeiten gemäss dem Oberbegriff von Anspruch 1.

Einwegverpackungen der eingangs genannten Art sind aus der US-A 2 647 661 und der EP-A 0 054 232 bekannt. Solche Einwegverpackungen werden in Entnahmeeinrichtungen eingesetzt, in denen der Entnahmeleitung durch Einwirkung eines mechanisch angetriebenen Pressorgans, unter Betätigung des Ueberdruckventils, eine vorbestimmte Flüssigkeitsmenge entnommen wird. Das Nachfüllen der Entnahmeleitung erfolgt aus dem Flüssigkeitsbehälter, dessen Inhalt unter Druck steht, nachdem ein von aussen auf die Entnahmeleitung einwirkendes bewegliches Abquetschorgan deren Durchflussquerschnitt freigegeben hat. Diese Entnahmeleitung besteht aus gummielastischem Material, das sowohl für das Entleeren über das Ueberdruckventil, als auch den zeitweiligen Verschluss des Flüssigkeitsbehälters durch das Abquetschorgan erforderlich ist. Bei solchen Einwegverpackungen ist die Dosiergenauigkeit und insbesondere die Reproduzierbarkeit der Dosierung über mehrere Einwegverpackungen unbefriedigend.

Aufgabe der vorliegenden Erfindung war es, eine Einwegverpackung der eingangs genannten Art mit verbesserter Dosiergenauigkeit und Reproduzierbarkeit zu schaffen. Da eine Einwegverpackung im allgemeinen mehrere hundert Einzeldosen enthält, ist eine Reproduzierbarkeit noch nach tausenden von Dosiervorgängen erwünscht.

Die gestellte Aufgabe wird erfindungsgemäss durch die Merkmale des kennzeichnenden Teils des Anspruches 1

A 4449 EP

gelöst. Bevorzugte Weiterausbildungen der Erfindung bilden den Gegenstand der Ansprüche 2 bis 19.

Der Lösungsgedanke beruht auf der Erkenntnis, dass die mangelnde Genauigkeit und Reproduzierbarkeit der Dosierung durch die Gummielastizität der Entnahmeleitung, d.h. der Druckabhängigkeit des Füllvolumens, verursacht wird.

Durch die erfindungsgemässe Anordnung des durch Flüssigkeitsdruck betätigbaren Einlassorgans in der Entnahmeleitung und des Ueberdruckventils im Absperrorgan, d.h. ausserhalb der Entnahmeleitung, kann auf die bisher unabdingbare Gummielastizität der Entnahmeleitung verzichtet werden. Der dadurch geöffnete Weg für die Verwendung eines unter Betriebsbedingungen nicht dehnbaren Materials erlaubt ein vom Füll- und Pressdruck unabhängiges genaues und reproduzierbares Dosieren.

Die Biegeelastizität gewährleistet dabei ein Formgedächnis der Entnahmeleitung, derart, dass sie nach Aufheben der Krafteinwirkung, d.h. des Pressdruckes, von sich aus die ursprüngliche meist zylindrische Form annimmt, und zwar unabhängig davon, ob der Nachfülldruck der Flüssigkeit aus dem Flüssigkeitsbehälter für die Herbeiführung einer vollständigen Rückverformung ausreichend ist oder nicht. Durch diese Rückverformung entsteht eine Saugwirkung, die ein beschleunigtes Nachfüllen der Entnahmeleitung bewirkt und noch bei kleinerem, gegebenenfalls sogar ohne auf den Flüssigkeitsvorrat wirkendem, Ueberdruck das Nachfüllen ermöglicht. Ausserdem wird dadurch das Nachfüllen der Entnahmeleitung beschleunigt, so dass eine schnellere Folge von Einzeldosierungen möglich ist.

Da die Entnahmeleitung der erfindungsgemässen Einwegverpackung nicht dehnbar ist und innen ein pro Längeneinheit gleichbleibendes Füllvolumen aufweist, muss beim Auspressen die Dehnung nicht berücksichtigt werden. Deshalb muss die Entnahmeleitung erfindungsgemäss beim Dosieren nicht vollständig, d.h. auf einen Innendurchmesser von Null, sondern kann auf nur einen Bruchteil seines Innendurchmessers zusammengepresst werden. Dies ist sowohl für die Entnahmeleitung als auch für die Entnahmeeinrichtung schonender. Da die Genauigkeit der Dosierung ausser von der Konstanz des Volumens der Entnahmeleitung pro Längeneinheit auch noch von der konstanten Wirkung der Entnahmeeinrichtung, d.h. des Pressorgans, abhängt, wird die Genauigkeit und damit die Reproduzierbarkeit über längere Zeit durch Schonung der Entnahmeeinrichtung weiter verbessert.

Zusätzlich zu den genannten Vorteilen führt die erfindungsgemässe Einwegverpackung auch zu einer Vereinfachung der Entnahmeeinrichtung, in der das Abquetschorgan, d.h. ein in Uebereinstimmung mit dem Anpresskolben zu bewegendes Element, entfällt.

Die Montage der Entnahmeleitung an den Flüssigkeitsbehälter erfolgt wirtschaftlich und problemlos, wenn das Einlassorgan zusätzlich als Verbindungsstück ausgebildet ist, das mit einem in einer Auslassöffnung des Flüssigkeitsbehälters angeordneten Nippel eine formschlüssige Verbindung eingeht.

Die einzelnen Elemente der Einwegverpackung können aus bekannten Materialien hergestellt werden. Entnahmeleitung, Nippel, Einlassorgan und Absperrorgan können aus den gleichen oder unterschiedlichen thermoplastischen Materialien bestehen, wobei auch Materialien mit gleichem monomerem Grundbaustein, z.B. Polyäthylen, jedoch mit verschiedenen Eigenschaften, eingesetzt werden können.

Die Verwendung eines nicht-gummielastischen thermoplastischen Materials, anstelle der bisher verwendeten gummiartigen Materialien, für die Entnahmeleitung erlaubt bereits bei der Formgebung, d.h. beim Extrudieren, das Einhalten von kleineren Toleranzen, was Einwegverpackungen mit gleichen Ertnahmeleitungen und dadurch die Reproduzierbarkeit der Dosierung auch über die einzelne Einwegverpackung hinaus sichert.

Zwischen den einzelnen miteinander verbundenen thermoplastischen Elementen ist vorzugsweise ein durch Hochfrequenz erhitzbarer Verbindungsring angeordnet, derart, dass das Verbinden dieser Elemente durch Hochfrequenzschweissen erfolgen kann. Durch letzteres entstehen in kurzer Zeit unlösbare Verbindungen hoher Qualität ohne Beeinflussung, wie Verformen oder Quellen, von an die Verbindungsstellen angrenzenden Materialbereichen. Eine Verbindung besonders hoher Qualität wird dann erhalten, wenn der Verbindungsring aus einem Polymer mit darin verteiltem, durch Hochfrequenz erhitzbarem, Material besteht, da dieser Ring unter den Schweissbedingungen selber schmilzt und eine zusammenhängende Verbindungsschicht bildet.

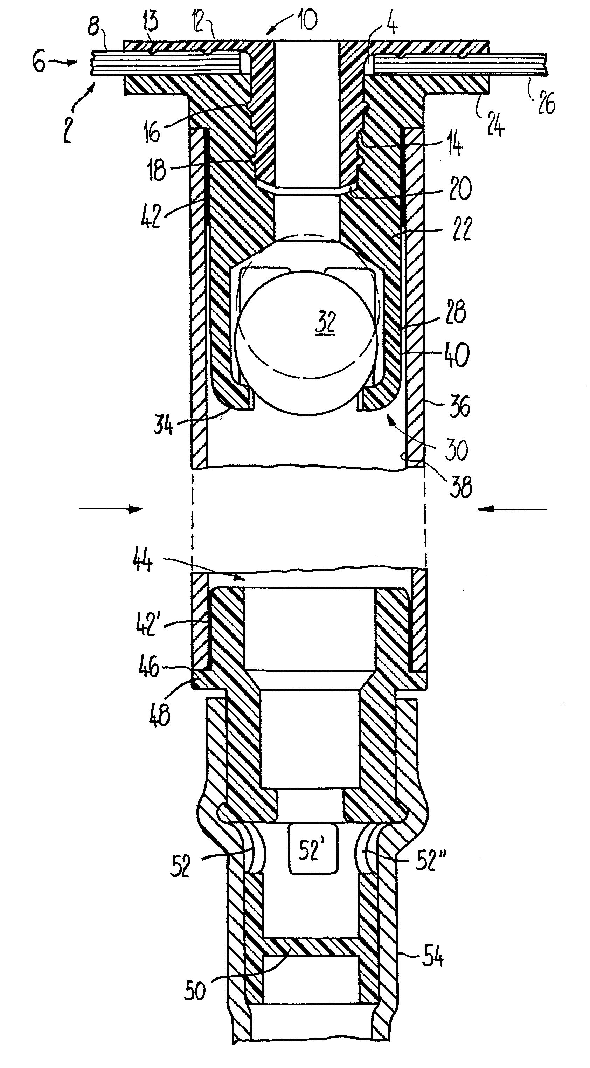

Im folgenden wird ein Ausführungsbeispiel des Erfindungsgegenstandes anhand der Figur näher erläutert.

Die Figur zeigt rein schematisch einen Schnitt durch einen Teil der erfindungsgemässen Einwegverpackung in vergrössertem Massstab.

Die Einwegverpackung in der Figur weist einen Flüssigkeitsbehälter 2 auf, von dem nur jene Bereiche seiner Wand 6, die eine Auslassöffnung 4 umgeben, dargestellt sind. Die Wand 6 besteht aus einem Laminat mit einer thermoplastischen Innenschicht 8, auf die der Flansch 12 eines durch die Auslassöffnung 4 nach unten ragenden Nippels 10 aufliegt und durch Schweissstellen 13 befestigt ist. Der Nippel 10 ist etwa in der Mitte seiner Längsausdehnung mit einer Schulter 14 auf einen kleineren Durchmesser herabgesetzt. Oberhalb und unterhalb der Schulter 14 ist je eine radiale Rippe 16,18 angeordnet, die in Ausnehmungen einer zum Nippel 10 gegengleich ausgebildeten durchgehenden Oeffnung 20 eines Kugelrückschlagventils 22 eingreifen und mit letzterem in formschlüssiger Verbindung stehen. Die Schulter 14 übernimmt dabei mit der gengleichen Fläche des Kugelrückschlagventils 22 die Funktion einer Dichtung. Ein Flansch 24 am freien Ende des Kugelrückschlagventils 22 liegt an die Aussenwand 26 des Flüssigkeitsbehälters 2 an, die dadurch einen Anschlag für das Kugelrückschlagventil 22 bildet.

Das Kugelrückschlagventil 22 weist in seinem unteren Teil einen von vertikalen Rippen 28 begrenzten Ventilkäfig 30 mit einer Kugel 32 auf. Jede Rippe 28 besitzt einen in den Ventilkäfig 30 hineinragenden Finger 34, auf den die Kugel 32 bei leerem Ventilkäfig 30 aufliegt.

Das Kugelrückschlagventil 22 wird vom oberen Teil einer zylindrischen Entnahmeleitung 36 umhüllt, wobei zwischen der Innenwand 38 der Entnahmeleitung 36 und der Aussenwand 40 des Kugelrückschlagventils 22 eine γ-Eisenoxyd enthaltende Polymerverbindungsschicht 42, welche die Hochfrequenzschweissung der beiden Wände 38,40 ermöglicht, angeordnet ist. Die Entnahmeleitung 36 ist unterbrochen dargestellt. In ihrem unteren Teil ist ein Absperrorgan 44 ebenfalls mittels einer γ-Eisenoxyd enthaltenden Polymerverbindungsschicht 42' angeschweisst, wobei die Endfläche 46 der Entnahmeleitung 36 auf einen Bund 48 am Absperrorgan 44 aufliegt. Das Absperrorgan 44 weist eine zur Achse der Entnahmeleitung 36 querliegende Absperrwand 50 und oberhalb letzterer drei radial angeordnete viereckige Durchlassöffnungen 52,52',52" auf. Diese bilden zusammen mit einer elastischen, das Absperrorgan 44 umfassenden Manschette 54 ein Ueberdruckventil.

Beim Füllen der Entnahmeleitung 36 liegt die Kugel 32 des Kugelrückschlagventils 22 auf die Finger 34 auf und die Flüssigkeit fliesst zwischen den Rippen 28 nach unten in die Entnahmeleitung 36. Wenn letztere gefüllt ist, drückt die Flüssigkeit die Kugel 32 nach oben in die gestrichelt dargestellte Stellung, wodurch der Ventilkäfig 30 nach oben gegenüber dem Flüssigkeitsbehälter 2 verschlossen wird. Zum Entleeren wird die Entnahmeleitung 36, wie durch Pfeile angedeutet, zusammengepresst, vorzugsweise jedoch nicht gequetscht. Durch den dadurch entstehenden Ueberdruck im Innern der Entnahmeleitung 36 wird die Manschette 54 von den Durchlassöffnungen 52,52',52" abgehoben und die Flüssigkeit fliesst aus der Entnahmeleitung, solange darin ein zur Aufweitung der Manschette genügender Ueberdruck herrscht.

Die in der Figur dargestellten Elemente wurden sowohl aus Polyäthylen niedriger als auch hoher Dichte (high density, low density) hergestellt, wobei die erforderliche Steifheit des Kugelrückschlagventils 22 und des Absperrorgans 44 durch entsprechende Dimensionierung erzielt wurde. Der Nippel 10 wird vorzugsweise weicher als das Kugelrückschlagventil 22 gestaltet, da ein biegsamer
Flansch 12 das Zusammenpressen des Flüssigkeitsbehälters 2
und dadurch eine Minimalisierung der nach der Entleerung
zurückbleibenden Restmenge der Flüssigkeit gestattet. Die
relative Härte des Kugelrückschlagventils 22 ist hingegen
für das Aufpressen auf den Nippel 10, z.B. mittels einer
Presshülse sowie für die Beständigkeit der dabei entstehenden formschlüssigen Verbindung, erforderlich.

Die Kugel 32 des Kugelrückschlagventils 22 kann eine Dichte von 0,9 bis 1,4 haben. Bei niedriger Dichte schwimmt
sie auf der Flüssigkeit auf (sogenanntes Schwimmkugelrückschlagventil) und gestattet bei einem relativ langen Ventilkäfig 30 eine genaue Dosierung und das Entweichen von
Luftblasen. Bei Kugeln 32 höherer Dichte muss für eine
genaue Dosierung ein kürzerer Ventilkäfig 30 vorliegen.
Die Länge des Ventilkäfigs 30 wird ausserdem noch von
der Wirkungsstrecke des Anpressorgans in der Entnahmeeinrichtung beeinflusst, da für genaue Dosierung bei grösserer Käfiglänge eine grössere Wirkungsstrecke erforderlich ist.

Die Entnahmeleitung 36, mit vorzugsweise einer Wandstärke
von 0,3 bis 0,6 mm, wird durch Extrusion aus einem Thermoplast hergestellt. Dabei werden Schläuche mit grosser
Massgenauigkeit erhalten.

Die Verbindungsschichten 42,42' bestehen in der dargestellten Anordnung ebenfalls aus Polyäthylen, das 5 bis 6 %
gleichmässig verteiltes, pulverförmiges γ-Eisenoxyd enthält. Die Verbindungsschichten 42,42' entstehen aus einem
entsprechenden, zwischen den Wänden angeordneten Ring
durch Hochfrequenzschweissung und ergeben eine dichte und strapazierfähige Verbindung.

Bei der elastischen Manschette 54 handelt es sich um Silikonkautschuk oder um ein thermoplastisches Elastomer. Anstelle der Manschette 54 kann ein entsprechender, die Durchlassöffnung 52,52'52" abdeckender elastischer Ring verwendet werden.

Ausser Polyäthylen können andere thermoplastische Polymere, wie Polypropylen oder Polyamide, eingesetzt werden. Bei der Wahl des zu verwendenden Materials ist ausser der Dehnbarkeit und der Biegeelastizität noch der Schmelzpunkt zu berücksichtigen, da Hochfrequenzschweissen mit dem Eisenoxyd nur bis zu dessen Curie-Punkt möglich ist. Bei hochschmelzenden Materialien sind die entsprechenden Verbindungen mit anderen bekannten Mitteln zu erstellen.

Selbstverständlich können nicht nur die Materialien, sondern auch die Formen des Nippels, des Rückschlagventils, des Absperrorgans und des Ueberdruckventils variiert werden.

Die erfindungsgemässe Einwegverpackung mit einem unter Betriebsbedingungen undehnbaren, vorzugsweise biegeelastischen, Schlauch als Entnahmeleitung, insbesondere in Kombination mit dem Einlass- und Absperrorgan ergibt eine Einwegverpackung, die die Flüssigkeit in genauen und über die Einzelpackung hinaus reproduzierbaren Dosen abgibt.

Einen weiteren Vorteil bildet die Verwendung eines als Rückschlagventil ausgebildeten Einlassorgans, da es die Entnahmeleitung nur während des Füllvorganges mit dem Flüssigkeitsvorrat im Flüssigkeitsbehälter verbindet, so dass zwischen diesen beiden kein Flüssigkeitsaustausch stattfinden kann. Im Gegensatz dazu ist das bekannte Abquetschen der Entnahmeleitung von aussen nur während der Flüssigkeitsentnahme wirksam, so dass während der übrigen, d.h. grössten Zeit, eine freie Zirkulation zwischen Flüssigkeitsbehälter und Entnahmeleitung stattfinden kann. Weiterhin arbeitet das Rückschlagventil verstopfungsfrei, da trotz allfälliger fester Teilchen, infolge der Saugwirkung der Entnahmeleitung, auch bei niedrigem Flüssigkeitsdruck, noch Flüssigkeit durchströmen kann, die die Teilchen wegspült.

Patentansprüche

1. Einwegverpackung für Flüssigkeiten, insbesondere für den Einsatz in Getränkeautomaten, mit einem Flüssigkeitsbehälter und einer daran angeschlossenen zusammenpressbaren schlauchförmigen Entnahmeleitung, dadurch gekennzeichnet, dass die Entnahmeleitung (36) unter Betriebsbedingungen nicht dehnbar ist.

2. Einwegverpackung für Flüssigkeiten, insbesondere für den Einsatz in Getränkeautomaten, mit einem Flüssigkeitsbehälter, einer daran angeschlossenen zusammenpressbaren schlauchförmigen Entnahmeleitung und einem Ueberdruckventil am freien Ende der Entnahmeleitung, dadurch gekennzeichnet, dass in der unter Betriebsbedingungen nicht dehnbaren biegeelastischen Entnahmeleitung (36) ein durch Flüssigkeitsdruck betätigbares Einlassorgan (22) für die Flüssigkeit angeordnet ist und dass das Ueberdruckventil sich in einem am freien Ende der Entnahmeleitung (36) angebrachten Absperrorgan (44) befindet.

3. Einwegverpackung nach Anspruch 1, dadurch gekennzeichnet, dass das Einlassorgan (22) und das Absperrorgan (44) aus einem thermoplastischen Kunststoff bestehen und über je einen durch Hochfrequenz erhitzbaren Verbindungsring (42,42') mit der thermoplastischen Entnahmeleitung (36) verbunden sind.

4. Einwegverpackung nach Anspruch 3, dadurch gekennzeichnet, dass die Verbindungsringe (42,42') aus einem eisenoxydhaltigen thermoplastischen Kunststoff bestehen.

5. Einwegverpackung nach einem der Ansprüche 2 bis 4, dadurch gekennzeichnet, dass das Einlassorgan ein Rückschlagventil, vorzugsweise ein Kugelrückschlagventil (22), ist.

6. Einwegverpackung nach einem der Ansprüche 2 bis 5, dadurch gekennzeichnet, dass das Einlassorgan (22) mit einem in der Auslassöffnung (4) des Flüssigkeitsbehälters (2) angeordneten Nippel (10) in formschlüssiger Verbindung, vorzugsweise Steckverbindung, steht.

7. Einwegverpackung nach einem der Ansprüche 2 bis 6, dadurch gekennzeichnet, dass das Ueberdruckventil von einer im Absperrorgan (44) angeordneten, mit einem elastischen Verschluss (54) versehenen Oeffnung (52) gebildet ist.

8. Einwegverpackung nach Anspruch 6, dadurch gekennzeichnet, dass das Ueberdruckventil von radial im zylindrischen Absperrorgan (44) angeordneten Oeffnungen (52,52', 52") und von einer das Absperrorgan (44) umfassenden elastischen Manschette (54) gebildet ist.

9. Einwegverpackung nach einem der Ansprüche 2 bis 8, dadurch gekennzeichnet, dass die Entnahmeleitung (36) aus Polyäthylen, vorzugsweise niederer bis mittlerer Dichte, besteht.

10. Einwegverpackung nach einem der Ansprüche 2 bis 8, dadurch gekennzeichnet, dass das Einlassorgan (22) und das Absperrorgan (44) aus Polyäthylen hoher Dichte und die Entnahmeleitung (36) aus Polyäthylen, vorzugsweise niederer bis mittlerer Dichte, bestehen.

11. Einwegverpackung für Flüssigkeiten, insbesondere für den Einsatz in Getränkeautomaten, mit einem Flüssigkeitsbehälter, einer daran angeschlossenen zusammenpressbaren schlauchförmigen Entnahmeleitung und einem Ueberdruckventil am freien Ende der Entnahmeleitung, dadurch gekennzeichnet, dass in der unter Betriebsbedingungen nicht dehnbaren biegeelastischen Entnahmeleitung (36) ein durch Flüssigkeitsdruck betätigbares Einlassorgan (22) für die Flüssigkeit und ein Absperrorgan (44) mit einem Druckventil angeordnet und mit der Entnahmeleitung (36) untrennbar verbunden ist.

12. Einwegverpackung nach Anspruch 11, dadurch gekennzeichnet, dass das Einlassorgan (22) und das Absperrorgan (44) mit der Entnahmeleitung (36) mittels Hochfrequenzschweissen verbunden ist.

13. Einwegverpackung nach Anspruch 12, dadurch gekennzeichnet, dass zwischen den Berührungsflächen der Entnahmeleitung (36) und des Einlassorgans (22) bzw. des Absperrorgans je ein Verbindungsring (42,42'), enthaltend oder bestehend aus einem mit Hochfrequenz erhitzbarem Material, angeordnet und mit den angrenzenden Berührungsflächen fest verbunden ist.

14. Einwegverpackung nach Anspruch 13, dadurch gekennzeichnet, dass der Verbindungsringe (42,42') aus einem γ-Eisenoxyd enthaltenden Polymeren bestehen.

15. Einwegverpackung nach Anspruch 14, dadurch gekennzeichnet, dass die Entnahmeleitung (36), das Einlassorgan (22) und das Absperrorgan (44) aus Polyäthylen, vorzugsweise hoher Dichte, und die Verbindungsringe (42,42') aus Polyäthylen, enthaltend 5 bis 6 % γ-Eisenoxyd,
bestehen.

16. Verfahren zur Herstellung einer Einwegverpackung nach
einem der Ansprüche 2 bis 15, dadurch
gekennzeichnet, dass man zwischen dem Einlassorgan (22)
bzw. der Entnahmeleitung (36) und dem Auslassorgan (44)
und der Entnahmeleitung (36) je einen Ring aus durch
Hochfrequenz erhitzbarem Material anordnet und die
Entnahmeleitung (36) mittels Hochfrequenz mit dem Einlassorgan (22) bzw. dem Auslassorgan (44) verschweisst.

17. Verfahren nach Anspruch 16, dadurch gekennzeichnet, dass
man Ringe aus einem Polymer, enthaltend 5 bis 6 %
γ-Eisenoxyd, verwendet und die Ringe mittels Hochfrequenz mit der Entnahmeleitung (36) und dem Einlassorgan
(22) bzw. dem Auslassorgan (44) verschweisst.

18. Verwendung der Einwegverpackung nach einem der Ansprüche 1 bis 10 und 11 bis 15 in Getränkeautomaten mit
einem mechanisch angetriebenen Pressorgan.

19. Verwendung nach Anspruch 18, dadurch gekennzeichnet,
dass das Pressorgan den Querschnitt der Entnahmeleitung (36) nur auf einen Teil ihres ursprünglichen
Querschnittes zusammenpresst.

1/1

0129131